# EUROPEAN PATENT SPECIFICATION

(11) **EP 3 566 857 B1**
(45) Date of publication and mention of the grant of the patent: **29.07.2020**
(21) Application number: 18171067.4
(22) Date of filing: 07.05.2018
(51) Int. Cl.: B29C 65/00, B32B 27/10, B65D 30/08, D21H 19/84, B31B 70/00

(54) **BAG WALL, BAG TUBE AND BAG PRODUCED THEREFROM AND METHOD FOR PRODUCING THEM**
TASCHENWAND, TASCHENROHR UND DARAUS HERGESTELLTE TASCHE UND VERFAHREN ZUR HERSTELLUNG DAVON
PAROI DE SAC, TUBE DE SAC ET SAC FABRIQUÉ À PARTIR DE CELUI-CI ET LEUR PROCÉDÉ DE PRODUCTION

(43) Date of publication of application: 13.11.2019
(73) Proprietor: Mondi AG, 1030 Wien (AT)
(72) Inventor: VOGELSKAMP, Uwe, 97753 Karlstadt (DE); ROSENWIRTH, Johannes, 9500 Villach (AT); KAINZ, Reinhard, 9400 Wolfsberg (AT)
(74) Representative: Gramm, Lins & Partner Patent- und Rechtsanwälte PartGmbB

(56) References cited:
- DE-A1- 2 846 009
- DE-U1-202006 014 003
- US-A- 4 820 570

## Description

The invention is related to a bag wall designed for producing a bag open on a top side by means of at least a connecting seam and for closing said bag by means of at least one further connecting seam after being filled with bulk material.

The present invention also refers to a bag tube formed from a bag wall of this kind by means of at least one longitudinal seam. The present invention is especially related to a bag wall consisting of different materials which adhere to each other over their whole surfaces so as to together form a single layer so that the bag wall and the bag formed therefrom is handled like a bag wall or bag consisting of only one layer of one material.

It is well-known to produce a bag by means of a multiple ply bag wall, where e.g. a central plastic layer is covered on both sides by a paper layer. It is also known to provide a bag with a central paper layer being covered on both sides by plastic films. A problem of said multilayer bags results from the connection of said layers of different material. Consequently, DE 28 46 009 A1 proposes a central layer which is provided with openings along linear connecting seam lines. If the central layer is a plastic film covered by paper layers, said covering paper layers may be connected together through said openings of the plastic film. In this way, the plastic film is fixed to the covering paper layers in both directions of the layer surfaces. In the same way a central paper layer may be provided with respective openings along a connecting seam line which allows covering plastic films on both sides of said central paper layer to be connected through said openings, e.g. by weld points. In any case, equal kinds of material may be connected together through said openings of the material of a different kind which may not easily be adhered to the different material of the covering layers.

DE 20 2006 014 003 U1 discloses a bag made of multiple plies comprising a first layer of perforated paper being laminated on each side with a perforated plastic layer. The perforations allow for some breathability through the composite paper bag.

There have been made attempts to connect different kinds of material over the whole surface by a lamination process. For example, a paper layer may be laminated with a plastic material, in order to allow the production of a weld seam within the plastic material. This method, however, leads to the problem of delamination when a certain load is imposed on the weld seam. The stability of the weld seam depends on the adherence of the substance laminated on the base layer, e. g. a plastic material on a base paper layer.

For many purposes bags are made of single layers of plastic material because of the simple way to form connecting seams, e. g. by welding. This has a special importance for so-called form, fill and seal (FFS) bags. Said bags are used in a manner different from the use of e. g. valve bags. Valve bags are produced by a bag manufacturer by forming a bag wall tube and folding a lower and an upper bottom. The upper bottom is provided with a valve opening formed between bottom flaps. The customer receives the completed bag and the filling process with bulk material at the customer's premises is performed using a filling machine provided with a filing nozzle which is introduced in the valve opening of the valve bag. After the filling the valve is closed by the weight of the bulk material introduced into the bag or in cases of dusty bulk material by means of a seam closing the valve opening e. g. by gluing or ultrasonic or high-frequency welding.

For FFS bags the bag manufacturer delivers the bag wall which is folded and wound on a core so as to form an endless supply reel. It is only at the customer's premises that a bag open at the top is formed by connecting seams.

In some embodiments the folded bag wall is an endless tube wound on the supply reel.

In another embodiment the bag wall is folded into two equal flaps along a longitudinal side edge which are not connected to each other at the opposite longitudinal side edge. At customer's premises the bag open at the top for filling purposes is formed by two connecting seams directed perpendicularly with respect to the longitudinal folding line. After said connecting seams have been performed the original longitudinal folding line now forms the closed bottom part of the bag being open at the top for filling.

After filling with the bulk material the open end which originally was the free longitudinal edge of the folded bag wall is now closed by a connecting seam, e. g. by welding.

The FFS bags are usually made of a plastic film forming the single ply bag wall. In order to obtain a necessary stability said plastic foil has to be relatively thick and therefore necessitates a relatively high material weight and disadvantages for the handling of the bag walls, e. g. for the folding steps.

It is an object of the present invention to offer a bag wall especially for FFS bags which overcomes the disadvantages of the prior art FFS bags without needing a multilayer handling of the bag walls.

Accordingly, a bag wall according to the present invention designed for producing a bag open on a top side by means of at least a connecting seam and for closing said bag by means of at least one further connection after being filled with bulk material is characterized by at least one Kraft paper layer forming a Kraft paper core and essentially determining the load capacity of the bag which core is provided with fine openings in two dimensional regions covering at least half of the surface of said layer and is directly coated on both sides with a plastic layer each wherein both plastic layers consist of plastic material being miscible in liquid states and wherein the plastic layers are connected to each other by material fit through said openings during the coating.

The bag wall according to the present invention has a Kraft paper core which is laminated on both sides with plastic material, thereby establishing a single ply bag wall. The stability or load capacity of said bag wall is considerably enhanced by the connection of both plastic coatings through said openings in the Kraft paper core, especially the tensile strength perpendicular to the surface of the wall, as needed e. g. for weld seams. The bag wall according to the present invention consequently provides a considerable enforcement by means of said openings which enforcement is advantageously provided in regions where connecting seams are established for forming the open bag or for closing the bag after filling. In a preferred embodiment of the invention the openings are present over the whole area of the Kraft paper core in a more or less regular pattern. The enforcement of the bag wall in the region of connecting seams is especially caused by the effect that a connecting seam between the e. g. inner coating of the Kraft paper core does not only depend upon the adhesion of said coating to the core but is enhanced by the outer coating due to the connection between inner coating and outer coating through said openings. As a result, the structure of the bag wall according to the present invention combines the adhesion between the coating and the core over its whole surface with a kind of anchoring both coatings through the openings of the core so that a seam, e. g. a weld or a glue seam, acting on one coating is simultaneously stabilized by the opposite coating of the core.

Although it may be sufficient to arrange the openings over selected regions of the Kraft paper layer, only, it may be advantageous to distribute the openings over the whole surface of the Kraft paper core, especially in a uniform density (number of openings per area unit). The distribution of the openings over the whole surface of the Kraft paper core may simplify the production of the Kraft paper core before the coatings are produced by applying the respective plastic material to both major sides of the Kraft paper core. Especially the openings may form a regular pattern repeating over the length and the width of the web of Kraft paper which is then coated on both sides and wound to form a supply reel.

In an embodiment of the invention the Kraft paper core has a grammage of 70 to 120 g/m² and the plastic layers each have a coating rate per unit area of 10 to 30 g/m².

It may be preferred to select a plastic layer designed for the inner side of the bag with a coating weight per unit area which is higher than the coating weight per unit of the layer designed for the outer side of the bag. The outer layer especially serves for protecting the bag against moisture whereas connecting seams are at least mostly applied to the inner layer of the bag, especially for producing weld seams for closing the bag.

In an embodiment of the invention the openings are fine openings having a largest dimension between 0.5 and 2 mm. The largest dimension may be a diameter if circular openings are applied. The openings may form a pattern wherein a distance between an opening and an adjacent opening is between 3 and 100 mm, especially between 10 and 50 mm. Said dimensions are in accordance with the requirements for a high load capacity or stability of the Kraft paper core which essentially determines the load capacity or stability of the bag since the coatings with plastic material are intended to be thin so that the handling of the bag is essentially determined by the properties of the Kraft paper core.

The bag wall of the present invention is especially suited for being used as a FFS bag. That means that the bag manufacturer produces the bag wall wound on a supply reel. The bag wall may be folded to form a closed bottom or may be provided with a longitudinal seam so as to form a continuous tube. In a modification the bag manufacturer may apply at least one further seam so as to determine the length or width of the bag and possibly to produce a bag open at the top for as specific user.

In normal cases, however, the user itself will determine the size of the bag by applying at least one seam in order to produce the bag open at the top for filling purposes. After the filling the bag is closed at the top by at least one further seam.

At least one seam, preferably all seams, is a weld seam. In case where the Kraft paper core has openings only in specific regions of its surface said region should be provided where the seams are applied. Obviously, this is automatically the case when the openings are distributed over the whole surface of the Kraft paper core. Embodiments of the present invention are illustrated in the accompanying drawings and will be described herein after.
- Figure 1: shows a schematic longitudinal section through a bag wall according to the present invention;
- Figure 2: shows a pattern of openings which may be repeated over the whole surface of a Kraft paper core;
- Figure 3: shows a schematic top view on a bag wall wound on a supply reel as a closed tube with dewinding steps as performed by the user;
- Figure 4: shows a side view corresponding to figure 3;
- Figure 5: shows a schematic perspective view on a filled and closed bag;
- Figure 6: shows a schematic representation of a bag wall formed as a closed tube by means of a longitudinal seam, the tube having gussets, as may be delivered by the bag manufacturer;
- Figure 7: shows a schematic representation of different seams applied to the delivered bag by the user before and after filling the bag.

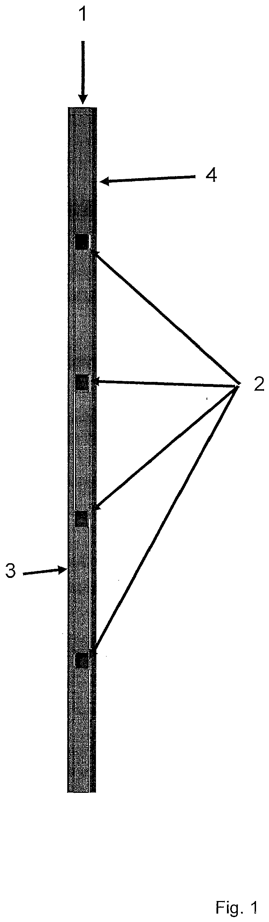

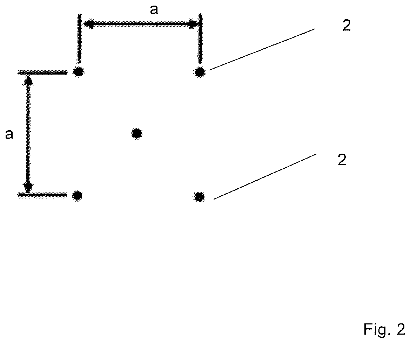

The bag wall a section of which is illustrated in figure 1 in a schematic enlarged view consists of a paper layer 1 having a multitude of openings 2 and being provided with a first coating 3 and a second coating 4. The first coating 3 is designed for the inner side of a bag formed by the bag wall whereas the second coating 4 is designed for the outer layer. The paper layer 1 is a Kraft paper layer which essentially determines the stability or load capacity of the bag wall. The paper layer 1 is directly coated with the first coating 3 and the second coating 4 which both are of plastic material like e. g. polyethylene. The coating is performed by applying the plastic material in a liquid state so that the plastic material of both coatings 3 and 4 migrate into the openings 2. Since the plastic material of both coatings are miscible they will completely fill the openings 2 so that both coatings 3, 4 are connected by material fit through said openings 2. The plastic material of both coatings 3, 4 is preferably thermoplastic material so that the plastic material in the liquid state is applied during lamination of the paper layer will become solid with the connection between both coatings 3, 4 through the openings 2. Figure 2 shows a possible pattern of five openings 2, four of them being arranged in the corners of a square and the fifth opening 2 in the center of the square. This pattern may be repeated over the whole surface of the bag wall. In an embodiment of the invention the largest dimension of the opening 2 lies between 0.5 and 2 mm and the distance a between 2 adjacent openings 2 may lie between 3 and 100 mm, preferably between 5 and 50 mm. The illustrated example of figure 2 shows a side length a of the square of 5 mm so that the pattern is characterized by a x a (5), where (5) means the number of openings 2 and a x a means the distance of the holes within the squares. It is noted that the distance between the openings 2 at the corners of the square and the central opening 2 is somewhat smaller than the distance a.

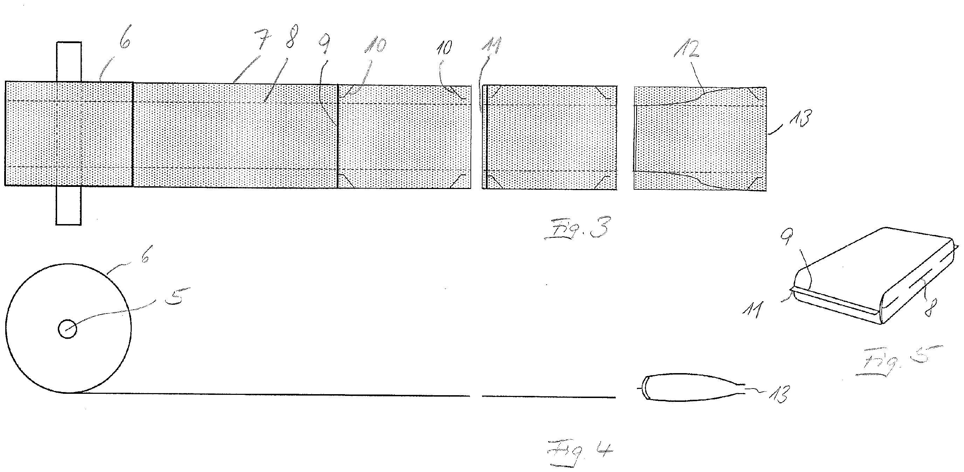

Figures 3 and 4 illustrate the arrangement of the bag wall of figure 1 formed as a tube with gussets and wound on a core so as to form a supply reel 6 from which a web 7 of a continuous bag tube is decoiled at the user's premises. In figure 3 the fold lines 8 defining the gussets of the bag tube is shown in dotted lines. During the unwinding process a first transverse seam 9, especially a weld seam, is applied defining the length of the bag formed from the tube 7. Furthermore, diagonal bottom seams 10 are applied as known in the art. In the next step a length of the web 7 is cut along a cutting line 11 so that now a bag open at the right end in figure 3 and 4 is produced. In the next step the bag is filled with bulk material as indicated by filling contour 12 in figure 3. The open end 13 of the filled bag is now closed by a final seam corresponding to bottom seam 9. The closed and filled bag is schematically illustrated in figure 5, where the height of the bag is determined by the defolded gussets. The folding line 8 of which is shown in figure 5.

It should be noted that figures 3 and 4 only show an embodiment of the production of an open bag from a bag wall according to the present invention. In the embodiment of figures 3 and 4 a web 7 of a bag tube is illustrated. As an alternative the web 7 may consist of a bag wall folded at one side edge so as to form a U shape. The free ends of both flaps of the bag wall are not connected and will establish the opening at the top when seams corresponding to seam 9 in figure 3 define side walls of the bag and the fold at the edge of the web 7 establishes a bottom of the bag. In this embodiment there is no gusset so that a shape of the filled bag will occur which may not be preferred in any case.

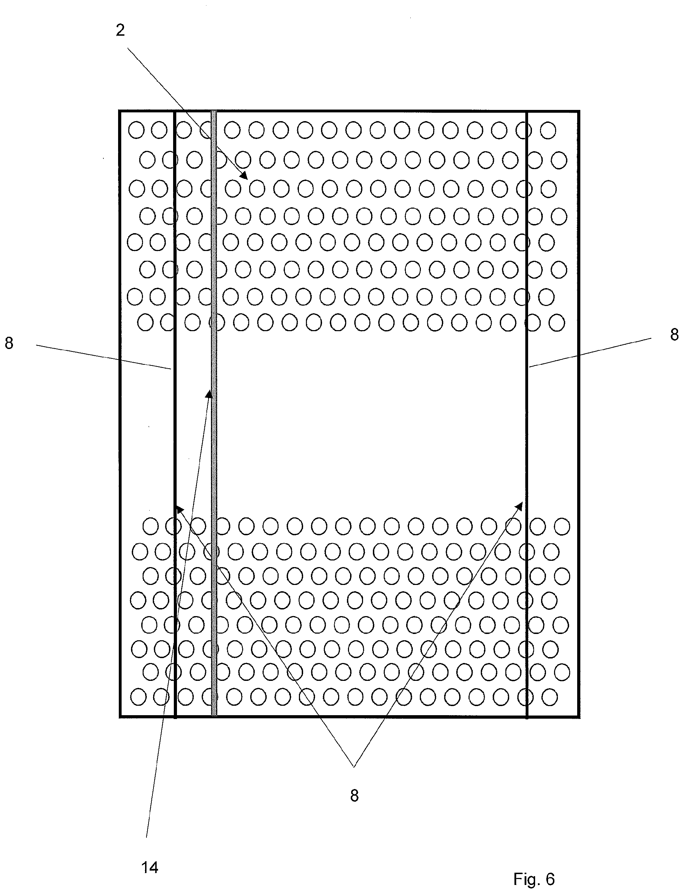

Figure 6 shows a section of the web 7 produced by the bag manufacturer when the bag wall forms the web 7 as a tube. There is a longitudinal seam 14 by which overlapping ends of the bag wall are connected. In this case a weld seam may be produced by connecting the second (outer) coating 4 with the first (inner) coating 3 along the longitudinal seam 14. Figure 6 illustrates the folding lines 8 for gussets formed in the wall tube as wound on the supply reel by the bag manufacturer. Only for the purpose of illustration the openings 2 are shown as an enlarged view. They form sections leaving a sector along the length of the tube without openings.

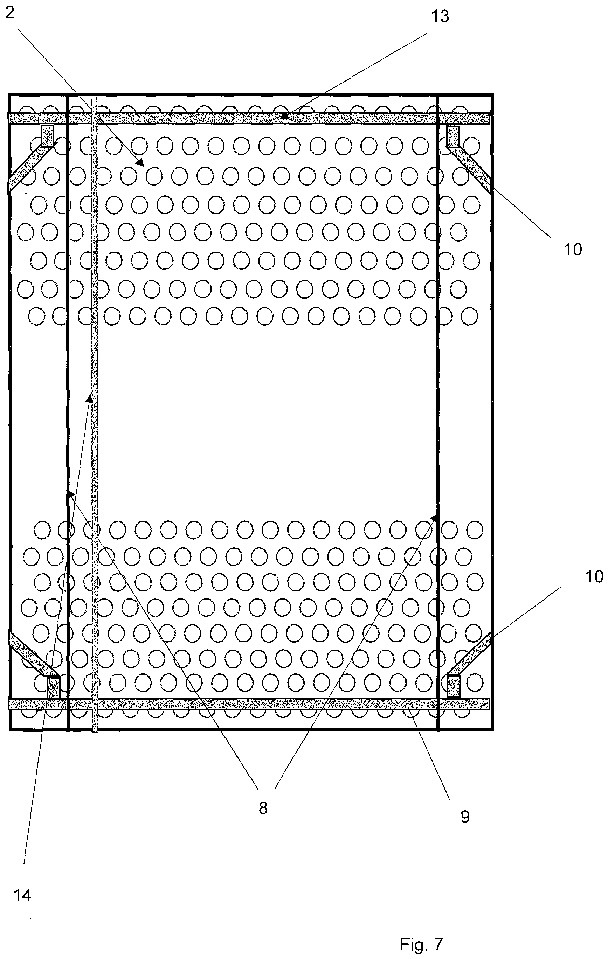

As shown in figure 7 at user's premises further seams 9, 10 and 13 are produced in the sections of the bag tube where openings 2 exist. Thereby, the seams 9, 10 and 13 are stabilized through the connections between the coatings 3, 4 through the openings 2, as described above.

## Claims

1. Bag wall designed for producing a bag open on a top side by means of at least a connection seam and for closing said bag by means of at least one further connecting seam after being filled with bulk material, wherein at least one Kraft paper layer forming a Kraft paper core (1) and essentially determining the load capacity of the bag which core (1) is provided with fine openings (2) in two-dimensional regions covering at least half of the surface of said core (1) and is directly coated on both sides with a plastic layer (3, 4) each **characterised in that** both plastic layers consist of plastic material being miscible in liquid states and wherein the plastic layers (3, 4) are connected to each other by material fit through said openings (2) during the coating.

2. Bag wall according to claim 1, **characterized in that** the openings (2) are distributed over the whole surface of the Kraft paper core (1).

3. Bag wall according to claim 1 or 2, **characterized in that** the openings are distributed uniformly over the surface of the Kraft paper core (1).

4. Bag wall according to one of the claims 1 to 3, **characterized in that** the openings (2) form a pattern wherein a distance between an opening and an adjacent opening is between 3 and 100 mm, especially between 5 and 50 mm.

5. Bag wall according to one of the claims 1 to 4, **characterized in that** the openings (2) form a regular pattern which repeats within the two-dimensional region of the surface of the core (1).

6. Bag wall according to one of the claims 1 to 5, **characterized in that** the Kraft paper core (1) has a grammage of 70 to 120 g/m² and the plastic layers each have a coating weight per unit area of 10 to 30 g/m².

7. Bag wall according to one of the claims 1 to 6, **characterized in that** the plastic layer (3) designed for the inner side of the bag has a higher coating weight per unit area than the plastic layer designed for the outer side of the bag.

8. Bag wall according to one of the claims 1 to 7, **characterized in that** at least one plastic layer (3, 4), preferably both plastic layers (3, 4), consists of polyethylene.

9. Bag wall according to one of the claims 1 to 8, **characterized in that** the largest dimension of each opening (2) is between 0.5 and 2 mm.

10. Method for producing a bag wall wherein a Kraft paper core (1) essentially determining the stability of the bag wall is provided on its whole surface with numerous openings (2) **characterised in that** the Kraft paper layer is coated on both sides with a plastic layer each in liquid states of the plastics so that the plastic layers (3, 4) are connected with each other through the openings (2) by material fit.

11. Bag tube formed from a bag wall according to one of the claims 1 to 9 by means of at least one longitudinal seam (14) connecting together longitudinal end portions of the flat bag wall so as to form the tube.

12. Bag tube according to claim 11, **characterized in that** the longitudinal seam is a weld seam.

13. Use of a bag wall according to one of the claims 1 to 9, **characterized in that** a web (7) of the bag wall is formed by means of a longitudinal seam (14) or a folding, a bag open at a top is formed from the web (7) by means of at least one seam (9, 10) and a bag section is separated by a cutting line (11), the bag open at the top is then filled with bulk material and closed after filling by means of at least one further seam (13).

14. Use according to claim 13, **characterized in that** at least one seam (9, 10, 13) is a weld seam and positioned in a region having openings (2).

## Patentansprüche

1. Sackwandung, ausgebildet zur Herstellung eines an einer Oberseite offenen Sacks mittels von Verbindungsnähten und zum Verschluss des Sacks mittels wenigstens einer weiteren verbindenden Naht, nachdem er mit Schüttgut gefüllt wurde, wobei zumindest eine Kraftpapierlage einen Kraftpapierkern (1) bildet und die Tragfähigkeit des Sacks überwiegend bestimmt und der Kern (1) mit feinen Öffnungen (2) in zweidimensionalen Bereichen versehen ist, die zumindest die Hälfte der Fläche des Kerns (1) bedecken und die beidseitig direkt mit je einer Kunststofflage (3, 4) beschichtet ist, **dadurch gekennzeichnet, dass** die beiden Kunststofflagen (3, 4) aus miteinander im flüssigen Zustand mischbarem Kunststoffmaterial bestehen und beim Beschichten durch die Öffnungen (2) hindurch miteinander materialschlüssig verbunden werden.

2. Sackwandung nach Anspruch 1, **dadurch gekennzeichnet, dass** die Öffnungen (2) über die gesamte Fläche des Kraftpapierkerns (1) verteilt sind.

3. Sackwandung nach einem der Ansprüche 1 oder 2, **dadurch gekennzeichnet, dass** die Öffnungen gleichmäßig über die Fläche des Kraftpapierkerns (1) verteilt sind.

4. Sackwandung nach einem der Ansprüche 1 bis 3, **dadurch gekennzeichnet, dass** die Öffnungen (2) ein Muster bilden, wobei ein Abstand zwischen einer Öffnung und einer benachbarten Öffnung zwischen 3 und 100 mm, insbesondere zwischen 5 und 50 mm liegt.

5. Sackwandung nach einem der Ansprüche 1 bis 4, **dadurch gekennzeichnet, dass** die Öffnungen (2) ein gleichmäßiges Muster bilden, welches sich in dem zweidimensionalen Bereich der Fläche des Kerns (1) wiederholt.

6. Sackwandung nach einem der Ansprüche 1 bis 5, **dadurch gekennzeichnet, dass** der Kraftpapierkern (1) ein Flächengewicht von 70 bis 120 g/m² aufweist und die Kunststofflagen jeweils ein Auftragsgewicht pro Flächeneinheit von 10 bis 30 g/m² aufweisen.

7. Sackwandung nach einem der Ansprüche 1 bis 6, **dadurch gekennzeichnet, dass** die für die Innenseite des Sacks vorgesehene Kunststofflage (3) ein höheres Auftragsgewicht pro Flächeneinheit aufweist als die für die Außenseite des Sacks vorgesehene Kunststofflage.

8. Sackwandung nach einem der Ansprüche 1 bis 7, **dadurch gekennzeichnet, dass** zumindest eine Kunststofflage (3, 4), bevorzugt beide Kunststofflagen (3, 4), aus Polyethylen besteht.

9. Sackwandung nach einem der Ansprüche 1 bis 8, **dadurch gekennzeichnet, dass** die größte Abmessung jeder Öffnung (2) zwischen 0,5 und 2 mm liegt.

10. Verfahren zum Herstellen einer Sackwandung, wobei ein Kraftpapierkern (1), der die Festigkeit der Sackwandung überwiegend bestimmt, über seine gesamte Fläche mit einer Mehrzahl von Öffnungen (2) versehen ist, **dadurch gekennzeichnet, dass** die Kraftpapierlage auf beiden Seiten mit einer Kunststofflage im flüssigen Zustand des Kunststoffs beschichtet wird, sodass die Kunststofflagen (3, 4) miteinander materialschlüssig durch die Öffnungen (2) hindurch verbunden sind.

11. Sackschlauch, gebildet aus einer Sackwandung nach einem der Ansprüche 1 bis 9, mittels zumindest einer Längsnaht (14), die Längsendabschnitte der flachen Sackwandung derart verbindet, dass ein Schlauch gebildet wird.

12. Sackschlauch nach Anspruch 11, **dadurch gekennzeichnet, dass** die Längsnaht eine Schweißnaht ist.

13. Verwendung einer Sackwandung nach einem der Ansprüche 1 bis 9, **dadurch gekennzeichnet, dass** eine Bahn (7) der Sackwandung mittels einer Längsnaht (14) oder einer Faltung gebildet wird, ein an einer Oberseite offener Sack mittels zumindest einer Naht (9, 10) aus der Bahn (7) ausgebildet wird und ein Sackabschnitt durch eine Trennlinie (11) abgetrennt wird, wobei der an der Oberseite offene Sack anschließend mit einem Schüttgut befüllt und nach dem Befüllen mittels zumindest einer weiteren Naht (13) verschlossen wird.

14. Verwendung nach Anspruch 13, **dadurch gekennzeichnet, dass** zumindest eine Naht (9, 10, 13) eine Schweißnaht ist und in einem Bereich mit Öffnungen (2) angeordnet ist.

## Revendications

1. Paroi de sac conçue pour produire un sac ouvert sur un côté supérieur au moyen d'au moins un cordon de connexion et pour fermer ledit sac au moyen d'au moins un autre cordon de connexion après avoir été rempli avec un matériau en vrac, dans laquelle est prévue au moins une couche de papier kraft formant une âme en papier kraft et déterminant essentiellement la capacité de chargement du sac, ladite âme (1) étant dotée de fines ouvertures (2) dans des régions bidimensionnelles couvrant au moins la moitié de la surface de ladite âme (1) et étant directement revêtue sur les deux côtés avec une couche de matière plastique (3, 4), **caractérisée en ce que**
les deux couches en matière plastique sont constituées en matières plastiques miscibles à l'état liquide, et dans laquelle les couches en matière plastique (3, 4) sont connectées l'une à l'autre par un matériau introduit à travers lesdites ouvertures (2) pendant le revêtement.

2. Paroi de sac selon la revendication 1, **caractérisée en ce que** les ouvertures (2) sont distribuées sur la totalité de la surface de l'âme en papier kraft (1).

3. Paroi de sac selon la revendication 1 ou 2, **caractérisée en ce que** les ouvertures sont distribuées uniformément sur la surface de l'âme en papier kraft (1).

4. Paroi de sac selon l'une des revendications 1 à 3, **caractérisée en ce que** les ouvertures (2) forment un motif dans lequel une distance entre une ouverture et une ouverture adjacente est entre 3 et 100 mm, spécialement entre 5 et 50 mm.

5. Paroi de sac selon l'une des revendications 1 à 4, **caractérisée en ce que** les ouvertures (2) forment un motif régulier qui se répète à l'intérieur de la région bidimensionnelle de la surface de l'âme (1).

6. Paroi de sac selon l'une des revendications 1 à 5, **caractérisée en ce que** l'âme en papier kraft (1) présente un grammage de 70 à 120 g/m² et les couches en matière plastique ont chacune un poids de revêtement par surface unitaire de 10 à 30 g/m².

7. Paroi de sac selon l'une des revendications 1 à 6, **caractérisée en ce que** la couche en matière plastique (3) conçue pour le côté intérieur du sac présente un poids de revêtement plus élevé par surface unitaire que la matière plastique conçue pour le côté extérieur du sac.

8. Paroi de sac selon l'une des revendications 1 à 7, **caractérisée en ce que** l'une au moins des couches en matière plastique (3, 4), de préférence les deux couches en matière plastique (3, 4), sont constituées de polyéthylène.

9. Paroi de sac selon l'une des revendications 1 à 8, **caractérisée en ce que** la plus grande dimension de chaque ouverture (2) est entre 0,5 et 2 mm.

10. Procédé pour produire une paroi de sac dans laquelle une âme en papier kraft (1) qui détermine essentiellement la stabilité de la paroi de sac est dotée sur la totalité de sa surface d'un grand nombre d'ouvertures (2), **caractérisé en ce que** la couche de papier kraft est revêtue sur les deux côtés avec une couche en matière plastique, chacune à l'état liquide de la matière plastique, de sorte que les couches en matière plastique (3, 4) sont connectées l'une à l'autre à travers les ouvertures (2) par liaison de matière.

11. Tube pour sac formé à partir d'une paroi de sac selon l'une des revendications 1 à 9, au moyen d'au moins un cordon longitudinal (14) qui connecte ensemble des portions d'extrémité longitudinale de la paroi de sac plane de manière à former le tube.

12. Sac tubulaire selon la revendication 11, **caractérisé en ce que** le cordon longitudinal est un cordon de soudure.

13. Utilisation d'une paroi de sac selon l'une des revendications 1 à 9, **caractérisée en ce qu'**une nappe (7) de la paroi de sac est formée au moyen d'un cordon longitudinal (14) ou d'un pliage, un sac ouvert au sommet est formé à partir de la nappe (7) au moyen d'au moins un cordon (9, 10) et un tronçon de sac est séparé par une ligne de coupe (11), le sac ouvert au sommet est alors rempli avec un matériau en vrac et est fermé après remplissage au moyen d'au moins un autre cordon (13).

14. Utilisation selon la revendication 13, **caractérisée en ce qu'**au moins un cordon (9, 10, 13) est un cordon de soudure et est positionné dans une région ayant des ouvertures (2).
